# EUROPÄISCHE PATENTSCHRIFT

(11) **EP 3 833 575 B1**
(45) Veröffentlichungstag und Bekanntmachung des Hinweises auf die Patenterteilung: **22.03.2023**
(21) Anmeldenummer: 19749237.4
(22) Anmeldetag: 18.07.2019
(51) Int. Cl.: B60R 1/00

(54) **KAMERAÜBERWACHUNGSSYSTEM**
SURVEILLANCE CAMERA SYSTEM
SYSTEME DE CAMERA DE SURVEILLANCE

(30) Priorität: 06.08.2018 DE 102018119026
(43) Veröffentlichungstag der Anmeldung: 16.06.2021
(73) Patentinhaber: KNORR-BREMSE Systeme für Nutzfahrzeuge GmbH, 80809 München (DE)
(72) Erfinder: NEMETH, Huba, 1116 Budapest (HU); BALOGH, Levente, 2310 Szigetszentmiklós (HU); TIHANYI, Viktor, 1032 Budapest (HU); SZÖLLOSI, Adam, 1119 Budapest (HU)
(86) Internationale Anmeldenummer: PCT/EP2019/069417
(87) Internationale Veröffentlichungsnummer: WO 2020/030404

(56) Entgegenhaltungen:
- EP-A2- 2 361 806
- DE-A1-102013 220 506
- US-A1- 2012 106 778
- US-B2- 8 199 975

## Beschreibung

Die vorliegende Erfindung bezieht sich auf ein Kameraüberwachungssystem und auf ein Verfahren zum Feststellen eines Fehlers in einem Kameraüberwachungssystem und insbesondere auf eine fehlerresistente Architektur für ein Kamerasystem von Nutzfahrzeugen.

Die kontinuierliche Verbesserung der Videosensortechnologie und der visuellen Darstellungsmöglichkeiten erlaubt es, bekannte Geräte der indirekten Sichtdarstellung in Fahrzeugen zunehmend zu ersetzen. So kommen statt der traditionellen Spiegel zunehmend Kameraüberwachungs- oder Kameraanzeigesysteme zum Einsatz, die die Spiegel ersetzen und eine höhere visuelle Qualität, zusätzliche Funktionalität wie beispielsweise ein Zoomen oder überlagerte Darstellungen auf Anzeigen ermöglichen. Eine weitere Motivation zum Einsatz von Kameraüberwachungssystemen besteht darin, dass die genutzten Kameras relative klein sind und damit der Luftwiderstand sich verringert. Die ansonsten genutzten Rückspiegel bieten wegen ihrer Größe eine beträchtliche Windangriffsfläche und verursachen somit einen deutlich höheren Verbrauch an Kraftstoff. Ein konventionelles System zum Detektieren von Hindernissen an der Seite von Fahrzeugen ist in US 8,199,975 B2 offenbart.

Obwohl die neuen Technologien viele Möglichkeiten bieten, sind sie auch mit einer Reihe neuer Fehlerquellen behaftet. Während bei konventionellen Rückspiegeln die Sichtqualität durch einen Glasbruch oder Oberflächenbeschmutzungen beeinträchtigt werden kann, umfassen Kameraanzeigesysteme viele Komponenten, die eine Vielzahl von weiterer Fehlerquellen mit sich bringen. Die Situation wird weiter dadurch verschlechtert, dass häufig ein Fehler in nur einem Teil des Systems ausreicht, um das Gesamtsystem funktionsuntüchtig zu machen, so dass als Konsequenz eine Erfassung des Rückbereiches durch Fahrzeugführer nicht mehr möglich ist. So kann beispielsweise eine Stromversorgung zusammenbrechen oder ein Software-Fehler auftreten oder ein elektrischer Kontakt einen Fehler aufweisen, um das Gesamtsystem außer Betrieb zu setzen.

Daher ist es wichtig, dass Kameraüberwachungssysteme mit einem geeigneten Fehlermanagementsystem ausgestattet sind, um selbst beim Auftreten eines Fehlers noch sicherzustellen, dass der Fahrer weiterhin Informationen über den rückwärtigen oder seitlichen Bereich des Fahrzeuges erhält.

Bekannte Kameraüberwachungssysteme sind beispielsweise in US 2017/282801, in US 2017/274827 A1, in EP 3 231 668 A1 und in US 2015/165975 A1 beschrieben. Die dort beschriebenen Systeme erlauben zwar das Ersetzen von Spiegeln durch Kameras, jedoch können auch bei diesen Systemen ein einfacher Fehler in einem Untersystem zu einem Versagen des Gesamtsystems führen. Ein solches Versagen ist im Personenkraftfahrzeugbereich nicht in dem Maße kritisch wie im Nutzfahrzeugbereich, da der Fahrer von Personenkraftwagen immer noch visuell den Seiten- und Rückbereich erfassen kann. Dies ist im Nutzfahrzeugbereich ausgeschlossen, da ein Fahrer beispielsweise die Beifahrerseite visuell nicht erfassen kann, wenn kein Spiegel oder kein fehlerfreies Kamerasystem zur Verfügung steht.

Daher besteht ein Bedarf nach einem Kameraüberwachungssystem, die für Nutzfahrzeuge geeignet sind und ein hohes Maß an Sicherheit bieten, um damit Rückspiegel ersetzen zu können.

Zumindest ein Teil der dieser Probleme wird durch ein Kameraüberwachungssystem nach Anspruch 1, ein Nutzfahrzeug nach Anspruch 11 und ein Verfahren nach Anspruch 12 gelöst. Die abhängigen Ansprüche definieren weitere vorteilhafte Ausführungsformen der Gegenstände der unabhängigen Ansprüche.

Die vorliegende Erfindung bezieht sich auf ein Kameraüberwachungssystem nach Ansrüch 1.

Das Kameraüberwachungssystem ist insbesondere ein Kameraanzeigesystem, das geeignet ist, um vorhandene Rückspiegel an einem Nutzfahrzeug zu ersetzen. Es ist daher insbesondere für eine seitliche Bilderfassung ausgelegt, um eine Umgebung des Fahrzeuges bildlich zu erfassen. Es versteht sich, dass Ausführungsbeispiele nicht auf die Anwendung in Nutzfahrzeugen eingeschränkt sein sollen. Das Kameraüberwachungssystem kann auch für andere Fahrzeuge genutzt werden.

Optional umfasst das Kameraüberwachungssystem eine dritte Kameraeinheit, die ausgebildet ist, um Bilddaten von einem weiteren Seitenbereich auf einer Fahrerseite des Nutzfahrzeuges zu erfassen. Die dritte Kameraeinheit stellt die Bilddaten zur Verarbeitung der ersten Bildverarbeitungseinheit zur Verfügung. Optional umfasst das Kameraüberwachungssystem eine vierte Kameraeinheit, die ausgebildet ist, um Bilddaten von dem weiteren Seitenbereich auf der Fahrerseite des Nutzfahrzeuges zu erfassen. Die vierte Kameraeinheit stellt die Bilddaten zur Verarbeitung der zweiten Bildverarbeitungseinheit zur Verfügung. Es versteht sich, dass dritte Kameraeinheit die Bilddaten auch der zweiten Bildverarbeitungseinheit und die vierte Kameraeinheit die Bilddaten auch der ersten Bildverarbeitungseinheit zur Verfügung stellen kann.

Optional umfasst das Kameraüberwachungssystem eine erste Anzeigeeinheit zur Anzeige von verarbeiteten Bilderdaten von der ersten Bildverarbeitungseinheit. Das Kameraüberwachungssystem kann außerdem eine zweite Anzeigeeinheit zur Anzeige von verarbeiteten Bilderdaten von der zweiten Bildverarbeitungseinheit umfassen.

Optional umfasst das Kameraüberwachungssystem eine Datenverbindung zwischen der ersten Bildverarbeitungseinheit und der zweiten Bildverarbeitungseinheit, wobei die erste Bildverarbeitungseinheit und die zweite Bildverarbeitungseinheit ausgebildet sind, um empfangene Bilddaten über die Datenverbindung auszugeben. Die Bilddaten können permanent zwischen den Bildverarbeitungseinheiten ausgetauscht werden oder nur bei Vorliegen eines bestimmten Ereignisses (wie z.B. ein festgestellter Fehler oder auf Anfrage).

Erfindungsgemäß ist die erste Bildverarbeitungseinheit und/oder die zweite Bildverarbeitungseinheit ausgebildet, um Bilddaten von überlappenden Erfassungsbereiche zu vergleichen und, basierend darauf, einen Fehler des Kameraüberwachungssystems festzustellen. Bei dem Vergleich können z.B. Abweichungen oder eingefrorene Bilder oder andere unerwartete Artefakte festgestellt werden. Bei dem Feststellen eines Fehlers kann eine Warnung ausgegeben werden oder Bilddaten von der defekten Bildverarbeitungseinheit an die intakte Bildverarbeitungseinheit weitergeleitet werden. Die überlappenden Erfassungsbereiche können beliebige Bereiche aus der Umgebung des Nutzfahrzeuges sein (auch Fahrbahnmarkierungen umfassen), die von verschiedenen Kameraeinheiten erfasst wurden. Um überlappende Bereiche vergleichen zu können, kann optional zunächst eine Bildtransformation ausgeführt werden, um z.B. Verzerrungen der genutzten Objektive zu eliminieren (z.B. von ein Fischaugenobjektiv).

Optional umfasst die erste Kameraeinheit ein Weitwinkelobjektiv oder ein Fischaugenobjektiv, um bei Anbringung an einem vorderen Eckbereich des Nutzfahrzeuges gleichzeitig einen Vorderbereich vor dem Nutzfahrzeug und den zumindest einen Seitenbereich auf der Beifahrerseite zu erfassen. Ebenso kann die vierte Kameraeinheit ein Weitwinkelobjektiv oder Fischaugenobjektiv aufweisen, um bei Anbringung an einem vorderen Eckbereich des Nutzfahrzeuges gleichzeitig den Vorderbereich und den Seitenbereich auf der Fahrerseite zu erfassen. Außerdem kann/können erfindungsgemäß die erste Bildverarbeitungseinheit und/oder die zweite Bildverarbeitungseinheit ausgebildet sein, um eine Bildtranstransformation von Bilddaten von der ersten Kameraeinheit und/oder von der zweiten Kameraeinheit durchzuführen, um Verzerrungen in horizontalen Bildbereichen (Randbereiche des Bildes) zu verringern. Auf diese Weise kann bei Ausfall der zweiten Kameraeinheit oder der dritten Kameraeinheit eine rückwärtige Bilderfassung durch die erste und/oder vierte Kameraeinheit gewährleistet werden. Mit der Bildtransformation sollen die Verzerrungen an dem äußeren Rand von Aufnahmen mit einem Fischaugenobjektiv beseitigt oder abgemildert werden, sodass ein Fahrer Objekte erkennen kann. Ebenso können die erste Bildverarbeitungseinheit und/oder die zweite Bildverarbeitungseinheit ausgebildet sein, um Fahrbahnmarkierungen in den Bilddaten von der ersten Kameraeinheit und/oder der zweiten Kameraeinheit und/oder der dritten Kameraeinheit und/oder der vierten Kameraeinheit zu identifizieren, um beispielsweise eine Spurverfolgung zu unterstützen.

Optional sind die erste Kameraeinheit und die vierte Kameraeinheit jeweils weiter ausgebildet sind, um Bodenbereiche vor und neben der Fahrerkabine zu erfassen, um so eine redundante Erfassung des Bodenbereichs vor der Fahrerkabine zu ermöglichen. Die Bodenbereiche (oder Sensorbereiche) stellen Flächen auf dem Boden dar, die durch die Kameras erfassbar sind.

Optional umfassen der Seitenbereich (auf Beifahrerseite) und der weitere Seitenbereich (auf der Fahrerseite) auf der jeweiligen Seite zumindest einen wie folgt definierten ersten Bodenbereich: Beginnend mit einer ersten Linie, die sich senkrecht zu einer Bewegungsrichtung des Nutzfahrzeuges erstreckt und um 4 m von einer Position eines Fahrzeugführer (oder dessen Augenpunkte) nach hinten versetzt ist, erstreckt sich der erste Bodenbereich mit einer variablen Breite seitlich parallel zu einem Fahrzeugrand nach hinten. Die variable Breite nimmt bis zu einem Abstand von 26 m von der ersten Linie linear von 1 m auf eine Breite von 5 m zu und bleibt dann konstant.

Optional umfassen der Seitenbereich (auf Beifahrerseite) und der weitere Seitenbereich (auf der Fahrerseite) auf der jeweiligen Seite zumindest einen wie folgt definierten zweiten Bodenbereich: Beginnend mit einer zweiten Linie, die sich senkrecht zu einer Bewegungsrichtung des Nutzfahrzeuges erstreckt und um 1,5 m von einer Position eines Fahrzeugführer nach hinten versetzt ist, erstreckt sich der zweite Bodenbereich mit einer variablen Breite seitlich parallel zu einem Fahrzeugrand auf eine Länge von 23,5 m nach hinten. Die variable Breite nimmt bis zu einem Abstand von 8,5 m von der zweiten Linie linear von 4,5 m auf eine Breite von 15 m zu und bleibt dann konstant.

Optional umfassen der Seitenbereich (auf Beifahrerseite) und der weitere Seitenbereich (auf der Fahrerseite) auf der jeweiligen Seite zumindest einen wie folgt definierten dritten Bodenbereich: Beginnend mit einer dritten Linie, die sich senkrecht zu einer Bewegungsrichtung des Nutzfahrzeuges durch eine Position eines Fahrzeugführers erstreckt, erstreckt sich der dritte Bodenbereich 1,75 m nach hinten und 1 m nach vorne auf einer Breite von 2 m parallel zu einem Fahrzeugrand.

Optional umfasst der Vorderbereich einen wie folgt definierten vierten Bodenbereich: Beginnend mit einer vorderen Fahrzeugbegrenzung erstreckt sich der vierte Bodenbereich bis auf zumindest 2 m vor einer Gesamtbreite der Führerkabine und seitlich 2 m über die Beifahrerseite hinaus. Optional ist die vordere Ecke auf dem seitlich überragenden Abschnitt mit einem Krümmungsradius von 2 m abgerundet.

Die vorliegende Erfindung bezieht sich auch auf ein Nutzfahrzeug mit einem zuvor beschriebenen Kameraüberwachungssystem.

Die vorliegende Erfindung bezieht sich auch auf ein Verfahren nach Anspruch 12.

Optional umfasst das Vergleichen zumindest eines aus dem Folgenden:
- Feststellen einer Nichtübereinstimmung der überlappenden Bildbereiche;
- Feststellen eines eingefrorenen Bildes, das von einem der Kameraeinheiten erfasst wurde;
- Transformieren von Bilddaten, um Verzerrungen von Fischaugenobjektiven oder Weitwinkelobjektiven zu verringern.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Die eingangs genannten Probleme werden durch Ausführungsbeispiele durch ein Kameraüberwachungssystem gelöst, bei dem die erste Kameraeinheit Bilddaten an die erste Bildverarbeitungseinheit schickt und die zweite Kameraeinheit Bilddaten an die zweite Bildverarbeitungseinheit sendet, wobei die erste Bildverarbeitungseinheit und die zweite Bildverarbeitungseinheit unabhängig voneinander Bilddaten verarbeiten und diese unabhängig voneinander einer Anzeige zur Verfügung stellen. Die erste Bildverarbeitungseinheit und die zweite Bildverarbeitungseinheit können demzufolge separate Einheiten darstellen, die zwar in einer Einheit integriert sein können, sich jedoch nicht gegenseitig beeinflussen, sodass der Ausfall eines der beiden Bildverarbeitungseinheiten keine negativen Auswirkungen auf die andere Bildverarbeitungseinheit hat. Vorteilhafterweise ist zwischen der ersten Bildverarbeitungseinheit und der zweiten Bildverarbeitungseinheit eine Datenverbindung vorgesehen, die zumindest bei Ausfall eines der beiden Bildverarbeitungseinheiten dazu dient, um die Bilddaten an die jeweils intakte Bildverarbeitungseinheit weiterzuleiten, so dass die entsprechenden Bilder dort dargestellt werden können. Ausführungsbeispiele stellen daher zumindest für die Beifahrerseite ein fehlerresistentes und redundantes System bereit.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Kameraüberwachungssystem gemäß einem Ausführungsbeispiel der vorliegenden Erfindung.
- Fig. 2: zeigt weitere optionale Komponenten des Kameraüberwachungssystems aus der Fig. 1.
- Fig. 3A,3B: veranschaulichen Bodenbereiche, die gemäß Ausführungsbeispielen von der zweiten Kameraeinheit gleichzeitig erfasst werden.
- Fig. 4A,4B: veranschaulichen Bodenbereiche, die gemäß Ausführungsbeispielen von der ersten Kameraeinheit gleichzeitig erfasst werden.
- Fig. 5A,5B: zeigt eine Anzeige für Bodenbereiche aus den Fig. 3A, 3B.
- Fig. 6A,6B: zeigt eine Anzeige für Bodenbereiche aus den Fig. 4A, 4B.
- Fig. 7A,7B: zeigen eine mögliche Anbringung der Kameraeinheiten an einem Nutzfahrzeug gemäß weiterer Ausführungsbeispiele.

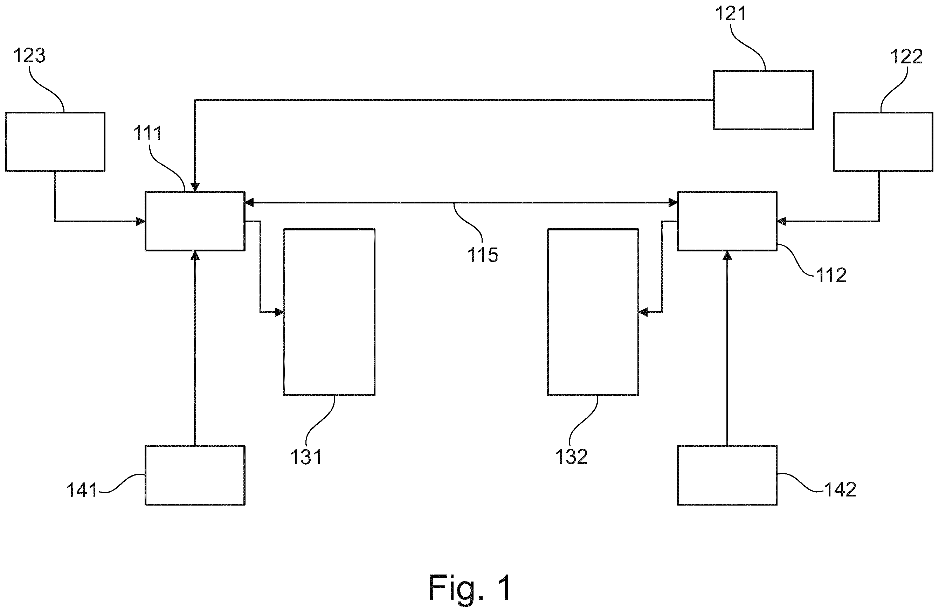

**Fig. 1** zeigt ein Kameraüberwachungssystem gemäß einem Ausführungsbeispiel der vorliegenden Erfindung. Es ist geeignet zur Anwendung in Nutzfahrzeugen und stellt insbesondere für die Beifahrerseite ein redundantes System dar, um dort vorhandene Rückspiegel durch das Kameraüberwachungssystem zu ersetzen. Das Kameraüberwachungssystem umfasst eine erste Bildverarbeitungseinheit 111, eine zweite Bildverarbeitungseinheit 112, eine erste Kameraeinheit 121 und eine zweite Kameraeinheit 122. Die erste Kameraeinheit 121 sendet Bilddaten an die erste Bildverarbeitungseinheit 111. Die zweite Kameraeinheit 122 sendet Bilddaten an die zweite Bildverarbeitungseinheit 112.

Die erste Kameraeinheit 121 und die zweite Kameraeinheit 122 sind ausgebildet, um in einem vorderen Eckbereich bzw. an einem Seitenbereich der Fahrerkabine (z.B. auf der Beifahrerseite) angebracht zu werden und um den seitlichen bzw. rückwärtigen Bereich des Nutzfahrzeuges unabhängig voneinander zu erfassen. Insbesondere erfasst die erste Kameraeinheit 121 einen Bodenbereich, der direkt an das Nutzfahrzeug angrenzt. Außerdem erfasst die erste Kameraeinheit 121 den Seitenbereich neben bzw. hinter der Fahrerkabine. Um dies zu erreichen, kann die erste Kameraeinheit 121 ein entsprechendes Weitwinkelobjektiv wie z.B. ein Fischaugenobjektiv umfassen. Die zweite Bildverarbeitungseinheit 122 erfasst einen seitlichen und rückwärtigen Bereich des Nutzfahrzeuges, wobei eine gleichzeitige Erfassung erfolgen kann. Hierzu kann wiederum ein entsprechendes Weitwinkelobjektiv vorgesehen sein.

Optional umfasst das Kameraüberwachungssystem aus der Fig. 1 eine dritte Kameraeinheit 123, die an einer Fahrerseite der Fahrerkabine anbringbar ist und ähnlich der zweiten Kameraeinheit 122 einen seitlichen und einen rückwärtigen Bereich auf der Fahrerseite erfasst. Die entsprechenden Bilddaten können an die erste Bildverarbeitungseinheit 111 gesendet werden (alternativ auch an die zweite Bildverarbeitungseinheit 112).

Weiterhin ist in dem Ausführungsbeispiel eine erste Anzeigeeinheit 131 und eine zweite Anzeigeeinheit 132 vorgesehen. Die erste Anzeigeeinheit 131 kann die verarbeiteten Bilddaten der ersten Bildverarbeitungseinheit 111 bildlich darstellen. Die zweite Anzeigeeinheit 132 kann die verarbeiteten Bilddaten der zweiten Bildverarbeitungseinheit 112 bildlich darstellen. Beispielsweise kann die erste Anzeigeeinheit 131 an einer Fahrerseite in der Fahrerkabine montiert werden und die zweite Anzeigeeinheit 132 an einer Beifahrerseite in der Fahrerkabine.

Weiterhin sind in dem Ausführungsbeispiel unabhängige Stromversorgungseinheiten 141, 142 vorgesehen. So kann beispielsweise für die erste Bildverarbeitungseinheit 111 eine erste Stromversorgungseinheit 141 vorgesehen sein. Ebenso kann für die zweite Bildverarbeitungseinheit 112 eine zweite Stromversorgungseinheit 142 vorgesehen sein. Auf diese Weise ist das dargestellte System vollständig redundant ausgebildet, so dass bei Ausfall eines einzelnen Untersystems (oder einer Komponente) immer noch sichergestellt ist, dass der Fahrer des Nutzfahrzeuges in der Lage ist, zumindest die Beifahrerseite sicher zu erfassen.

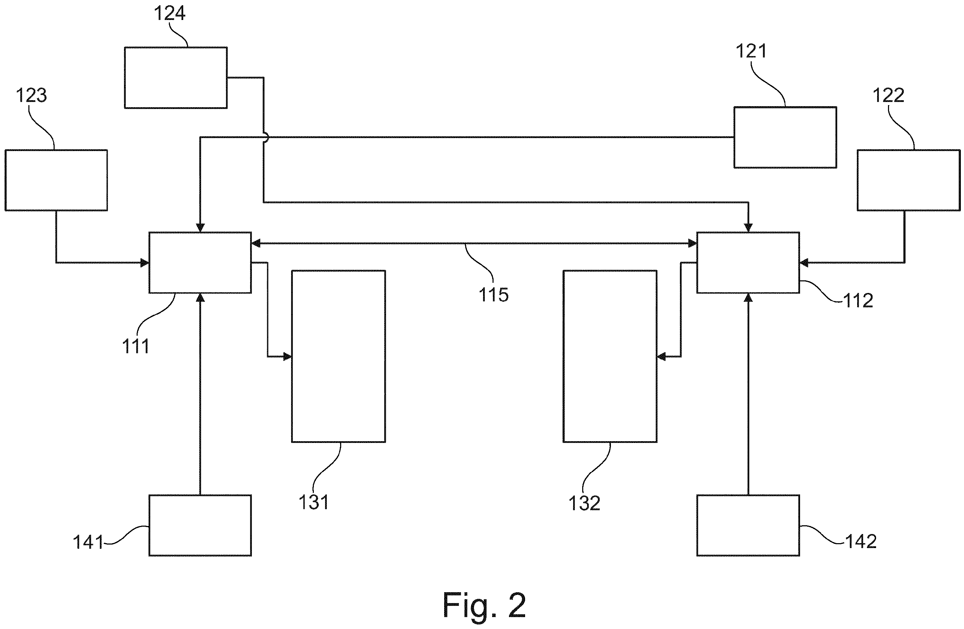

**Fig. 2** zeigt ein weiteres Ausführungsbeispiel für das Kameraüberwachungssystem, welches sich von dem in der Fig. 1 dargestellten System dadurch unterscheidet, dass eine vierte Kameraeinheit 124 vorgesehen ist, die auf der Fahrerseite in einem Eckbereich der Fahrerkabine anbringbar ist und Bilddaten an die zweite Bildverarbeitungseinheit 112 zur Darstellung sendet. Die vierte Kameraeinheit 123 kann ähnlich oder gleich zur ersten Kameraeinheit 121 ausgebildet sein und einen Bodenbereich, der direkt an das Nutzfahrzeug angrenzt, erfasst. Außerdem kann die vierte Kameraeinheit 124 einen Seitenbereich neben bzw. hinter der Fahrerkabine auf der Fahrerseite erfassen. Um dies zu erreichen, kann auch die vierte Kameraeinheit 124 ein entsprechendes Weitwinkelobjektiv wie z.B. ein Fischaugenobjektiv umfassen.

Da sowohl die erste Kameraeinheit 121 als auch die vierte Kameraeinheit 124 an entsprechenden vorderen Eckbereichen der Fahrerkabine anbringbar sind und ihre Bilddaten an verschiedene Bildverarbeitungseinheiten 111, 112 übermitteln, ermöglicht das beispielhafte Fischaugenobjektiv auch eine redundante Erfassung des Bodenbereiches vor der Fahrerkabine.

Das Kameraüberwachungssystem aus der Fig. 2 umfasst somit zwei parallele Untersysteme, die mehr oder weniger gleich ausgebildet sein können und jeweils eine eigene Bildverarbeitungseinheit aufweisen. So erhält die zweite Bildverarbeitungseinheit 112 sowohl Bilddaten von der Fahrerseite (über die vierte Kameraeinheit 124) als auch von der Beifahrerseite (über die zweiten Kameraeinheit 122), die nach der Verarbeitung auf der zweiten Anzeigeeinheit 132 bildlich dargestellt werden. In gleicher Weise verarbeitet die erste Bildverarbeitungseinheit 111 sowohl Bilddaten von der Fahrerseite (über die dritte Kameraeinheit 123) als auch Bilddaten von der Beifahrerseite (von der ersten Kameraeinheit 121) und stellt die Resultate auf der ersten Anzeigeeinheit 131 bildlich dar. Somit wird ein vollständig redundantes System sowohl auf der Fahrerseite als auch auf der Beifahrerseite und dem Bereich vor dem Nutzfahrzeug erreicht.

In den Ausführungsbeispielen der Fig. 1 und Fig. 2 ist außerdem eine Datenverbindung 115 zwischen der ersten Bildverarbeitungseinheit 111 und der zweiten Bildverarbeitungseinheit 112 vorgesehen. Die erste Bildverarbeitungseinheit 111 und die zweite Bildverarbeitungseinheit 112 können beispielsweise ausgebildet sein, um im Falle eines Fehlers die Bilddaten, die normalerweise von der entsprechenden Bildverarbeitungseinheit 111, 112 verarbeitet werden an die jeweils andere Bildverarbeitungseinheit weiterzuleiten. Die jeweils andere Bildverarbeitungseinheit kann dann die übertragenen Bilddaten auf der jeweils zugehörigen, korrekt arbeitenden Anzeigeeinheit darstellen. Optional kann der Fahrer über das Fehlverhalten informiert werden. Dazu kann eine Warnung ausgegeben werden.

Optional ist es weiter möglich, dass über die Datenverbindung 115 fortlaufend Bilddaten übermittelt werden (auch in einem Nichtfehlerfall). In diesem Fall können die Bilddaten verglichen werden - zumindest für überlappende Erfassungsbereiche. Basierend auf dem Vergleich ist es möglich, Fehler im System festzustellen (z.B. durch ein eingefrorenes Bild). Die über die Datenverbindung 115 übermittelten Bilder können durch die jeweils andere Anzeigeeinrichtung ebenfalls dargestellt. Der Fahrer kann auch in diesem Fall über den Fehler informiert werden.

Gemäß Ausführungsbeispielen können einige oder alle Kameraeinheiten Weitwinkelobjektive umfassen, wobei die erste Kameraeinheit 121 und die vierte Kameraeinheit insbesondere ein Fischaugenobjektiv aufweisen. Dadurch können, wie bereits gesagt, verschiedene Sensorbereiche und insbesondere Bodenbereiche um das Fahrzeug herum parallel erfasst werden. So kann beispielsweise die zweite Kameraeinheit 122 ausgebildet sein, um einen ersten und einen zweiten Bodenbereich seitlich neben bzw. hinter dem Nutzfahrzeug zu erfassen. Die erste Kameraeinheit 121 kann ebenfalls ausgebildet sein, um einen dritten Bodenbereich seitlich unterhalb der Fahrerkabine, und einen vierten Bodenbereich vor der Fahrerkabine, erfassen.

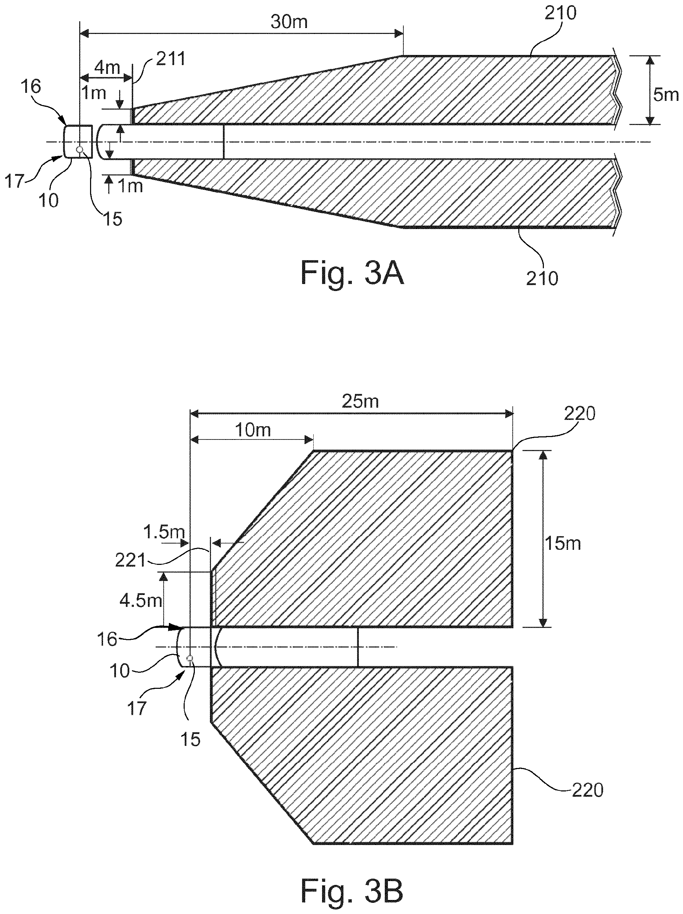

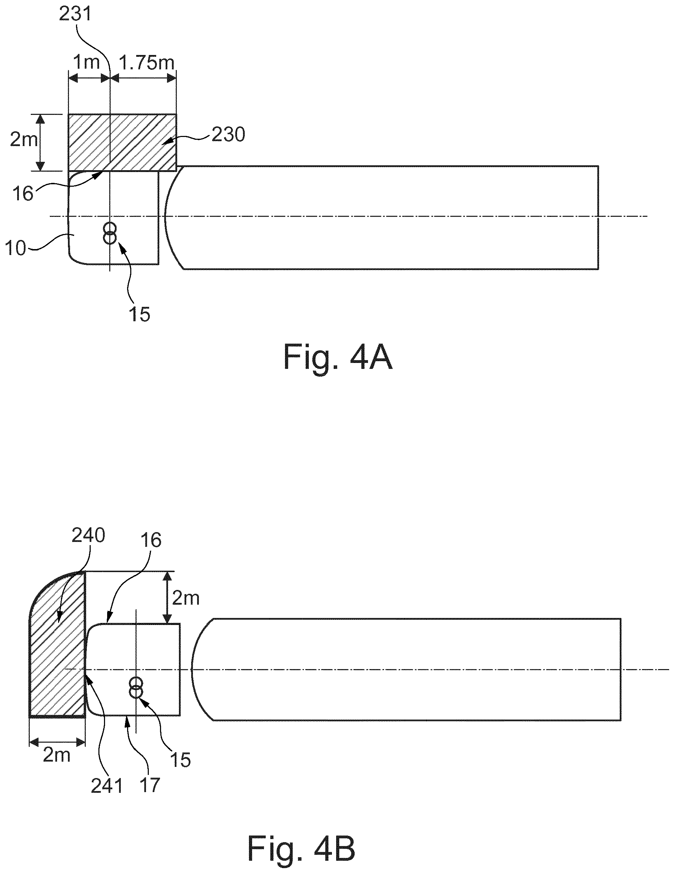

**Fig. 3A, Fig. 3B****,** **Fig. 4A** und **Fig. 4B** veranschaulichen die Bodenbereiche, die gemäß Ausführungsbeispielen zum Beispiel von den Kameraeinheiten 121, 122, 123, 124 als Seitenbereiche (oder weitere Seitenbereiche) gleichzeitig erfasst werden. Hier und im Folgenden verstehen sich alle Längenangaben bis auf eine Toleranz von ± 10% oder ±5%. Außerdem sind folgenden Bodenbereiche Minimalbereiche, die zumindest erfasst werden. Es versteht sich, dass die Kameraeinheiten darüber hinaus weitere Bereiche erfassen werden.

Fig. 3A, 3B veranschaulichen Bodenbereiche 210, 220, die gemäß Ausführungsbeispielen von der zweiten Kameraeinheit gleichzeitig erfasst werden.

Die Fig. 3A zeigt den ersten Bodenbereich 210, der sich beidseitig vom Fahrzeug erstreckt und wie folgt definiert werden kann: Er beginnt mit einer ersten Linie 211, die sich senkrecht zu einer Bewegungsrichtung des Nutzfahrzeuges erstreckt und um 4 m von einer Position 15 eines Fahrzeugführer (oder dessen Augenpunkte) nach hinten versetzt ist, und erstreckt sich mit einer variablen Breite seitlich parallel zu beiden Fahrzeugrändern 16, 17 nach hinten. Die variable Breite nimmt bis zu einem Abstand von 26 m von der ersten Linie 211 linear von 1 m auf eine Breite von 5 m zu und bleibt dann konstant. Der erste Bodenbereich 210 umfasst somit eine Maximalbreite von ca. 5 m, wobei diese Maximalbreite in einem Abstand von ca. 30 m beginnend mit der Fahrerposition erreicht wird.

Die Fig. 3B zeigt den zweiten Bodenbereich 220, der sich beidseitig vom Fahrzeug erstreckt und wie folgt definiert werden kann: Der zweite Bodenbereich 220 beginnt mit einer zweiten Linie 221, die sich senkrecht zu einer Bewegungsrichtung des Nutzfahrzeuges erstreckt und um 1,5 m von einer Position 15 eines Fahrzeugführer (oder dessen Augenpunkte) nach hinten versetzt ist, und erstreckt sich mit einer variablen Breite seitlich parallel zu den Fahrzeugrändern 16, 17 auf eine Länge von 23,5 m nach hinten. Die variable Breite nimmt bis zu einem Abstand von 8,5 m von der zweiten Linie 221 linear von 4,5 m auf eine Breite von 15 m zu und bleibt dann konstant. Er verbreitert sich somit von ca. 4,5 m bis auf eine Maximalbreite von 15 m, die in einem Abstand von ca. 10 m von der Fahrerposition erreicht wird.

Der erste Bodenbereich 210 aus der Fig. 3A stellt somit im Wesentlichen einen Sichtbereich nach hinten dar, während der zweite Bodenbereich 220 aus der Fig. 3B einen Seitensichtbereich darstellt, der beispielsweise für einen Spurwechsel wichtig ist, um z.B. zu erfassen, ob ein Fahrzeug in einer oder zwei Spuren neben dem Fahrzeug vorhanden ist.

Die zweite Kameraeinheit 122 (und analog die dritte Kameraeinheit 123 auf der Fahrerseite 16) dient in erster Linie zur Erfassung des ersten Bodenbereiches 210 und simultan des zweiten Bodenbereiches 220.

Fig. 4A, 4B veranschaulichen den dritten Bodenbereiche 230 und den vierten Bodenbereich 240, die gemäß Ausführungsbeispielen in erster Linie von der ersten Kameraeinheit 121 (und analog von der vierten Kameraeinheit 124 auf der Fahrerseite 16) gleichzeitig erfasst werden.

Die Fig. 4A veranschaulicht den dritten Bodenbereich 230, der sich von einer dritten Linie 231, die senkrecht zu einer Bewegungsrichtung des Nutzfahrzeuges durch die Position 15 des Fahrers geht, um 1,75 m nach hinten und um ca. 1 m nach vorne erstreckt. Die Breite des dritten Bodenbereiches 230 ist ca. 2 m, gemessen von dem rechten Fahrzeugrand 16. In gleicher oder ähnlicher Weise wird der dritte Bodenbereich 230 für die Fahrerseite 17 definiert.

Die Fig. 4B zeigt einen vierten Bodenbereich 240, der beispielhaft ebenfalls durch die erste Kameraeinheit 121 erfassbar ist. Der vierte Bodenbereich 240 erstreckt sich beginnend mit der Vorderseite 241 der Fahrerkabine 10 über die Fahrzeugbreite bis zu einer Entfernung von ca. 2 m nach vorne und bis zu 2 m über den Fahrzeugrand 16 auf der Beifahrerseite hinaus. Optional ist der vierte Bodenbereich 240 an der vorderen rechten Ecke (von der Sicht des Fahrers aus) mit einem Krümmungsradius von ca. 2 m abgerundet.

Der dritte Bodenbereich 230 und der vierte Bodenbereich 240 erfassen somit insbesondere Bereiche, die für Fahrzeugführer von Nutzfahrzeugen schlecht oder kaum einsehbar ist (im Gegensatz zu Personenkraftwagen).

Um die gewünschte Redundanz des Kameraüberwachungssystems zu erreichen, wird die erste Kameraeinheit 121 beispielsweise derart an dem Nutzfahrzeug montiert (z.B. in einem oberen Eckbereich der Fahrerkabine 10 auf der Beifahrerseite 16), so dass die erste Kameraeinheit 121 den dritten Bodenbereich 230, den vierten Bodenbereich 240, den ersten Bodenbereich 210 und den zweiten Bodenbereich 220 erfassen kann. Um alle Bodenbereiche möglichst wirklichkeitsnah bildlich darstellen zu können, können beispielsweise Aufnahmen vom ersten Bodenbereich 210 und vom zweiten Bodenbereich 220 entsprechend verarbeitet werden, um mögliche Verzerrungen durch das Weitwinkelobjektiv der ersten Kameraeinheit 121 zu beseitigen.

Aufgrund der Redundanz wird es möglich, dass das Kameraüberwachungssystem konventionelle Spiegel ersetzt. Selbst bei Ausfall eines der Kameraeinheiten 121, 122, ... wird immer noch sichergestellt, dass der Fahrer eine ausreichende Seiten- und rückwärtige Übersicht behält - insbesondere nach den genannten Bildtransformationen (z.B. für die Bilddaten der erste Kameraeinheit 121, um sie für die rückwärtige Sichterfassung anzupassen). Hierzu ist es vorteilhaft eine ausreichend hohe Auflösung für die Kameraeinheiten zu wählen, so dass ausreichend viele Bilddetails für weiter hinten gelegenen Bereiche vorliegen.

Die redundante Bilderfassung, Bildverarbeitung und -darstellung wird gemäß der vorliegenden Erfindung nicht nur für die Beifahrerseite 16 erreicht, sondern ebenfalls auf der Fahrerseite 17. Dazu dient das System aus der Fig. 2, bei dem auch auf der Fahrerseite 17 zwei unabhängige Kameraeinheiten vorgesehen sind: die dritte Kameraeinheit 123, die Bilddaten an die erste Bildverarbeitungseinheit 111 sendet, und die vierte Kameraeinheit 124, die Bilddaten an die zweite Bildverarbeitungseinheit 112 sendet. Auch wenn es bei diesen Komponenten zu einem Ausfall kommt, kann durch das intakte Untersystem immer noch gewährleistet werden, dass Bilddaten über die entsprechende Anzeige dargestellt werden können (z.B. infolge der unabhängigen Bildverarbeitungseinheiten). Auch auf der Fahrerseite ist die vierte Kameraeinheit 124 eine Weitwinkel- oder Fischaugenkamera, die jedoch ebenfalls Bilddaten erfasst, die nach entsprechender Transformation geeignet sind, um den ersten und zweiten Bodenbereich 210, 220 zu erfassen und dem Fahrer möglichst unverzerrt bildlich darzustellen. Dazu kann die vierte Kameraeinheit 124 wiederum in einem oberen Eckbereich der Fahrerkabine des Nutzfahrzeuges angebracht werden, so dass diese Kameraeinheit nicht nur den dritten Bodenbereich 230 und den vierten Bodenbereich 240 (vor der Fahrerkabine) erfassen kann, sondern auch den rückwärts gerichteten ersten Bodenbereich 210 und den zweiten Bodenbereich 220.

Die erste Kameraeinheit 121 und die vierte Kameraeinheit 124 können beispielsweise gleich gebildet sein und lediglich an verschiedenen Positionen an der Fahrerkabine befestigt werden. Ebenso können die zweite Kameraeinheit 122 in der gleichen Weise ausgebildet werden wie die dritte Kameraeinheit 123 und lediglich auf der gegenüberliegenden Fahrzeugseite angebracht werden.

Ausführungsbeispiele erlauben somit den Fahrer ständig die Kontrolle über das Geschehen sowohl auf der linken Fahrzeugseite als auch auf der rechten

Fahrzeugseite zu behalten und einen sicheren Spurwechsel durchzuführen, und zwar selbst für den Fall, dass eine Fehlfunktion in einer der Kameraeinheiten 121, 122, ... oder Verarbeitungseinheiten 111, 112 oder Anzeigen 131, 132 auftritt.

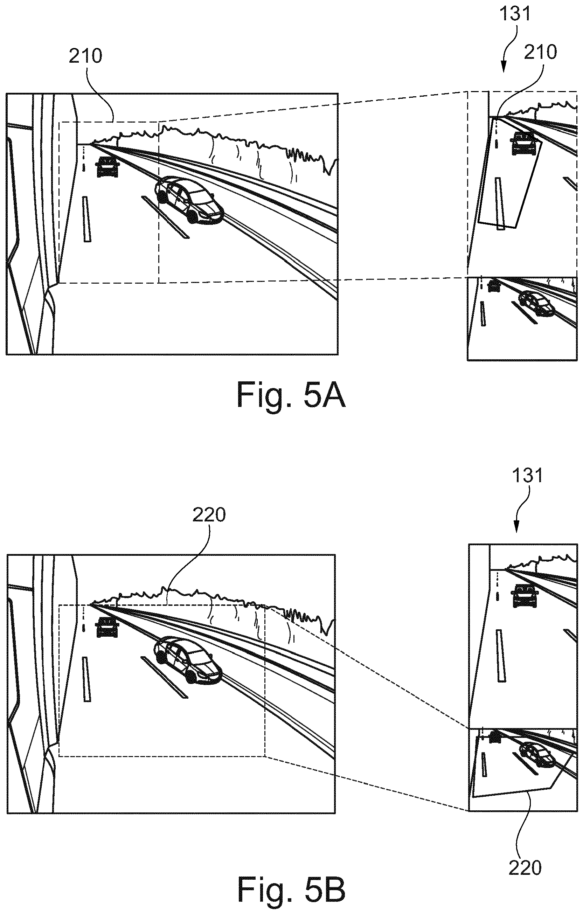

Die **Fig. 5A** und **Fig. 5b** zeigen beispielhaft ein erfasstes Bild von der Fahrerseite (auf der linken Seite) und eine dazugehörige Darstellung in der entsprechende ersten Anzeigeeinheit 131 (auf der rechten Seite). In der Fig. 5A ist beispielhaft der erste Bodenbereich 210 hervorgehoben, der beispielsweise in einem oberen Bereich der Anzeige in der ersten Anzeigeeinheit 131 dargestellt wird. Die Fig. 5B zeigt den zweiten Bodenbereich 220, der beispielsweise auf der ersten Anzeigeeinheit 131 in einem unteren Bereich dargestellt wird.

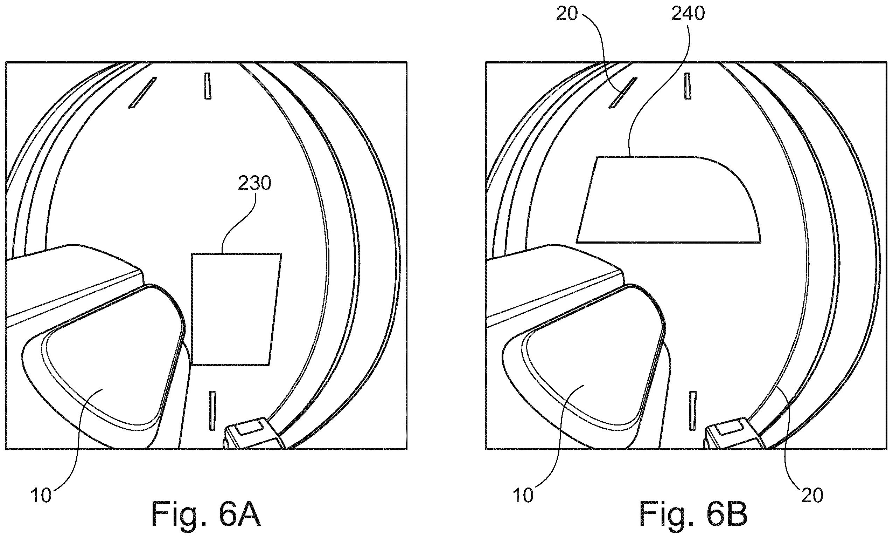

Die **Fig. 6A** zeigt beispielhaft ein erfasstes Bild mit dem hervorgehobenen dritten Bodenbereich 230, wie er durch die erste Kameraeinheit 121 auf der Beifahrerseite 16 erfasst wird. Die **Fig. 6B** zeigt beispielhaft den vierten Bodenbereich 240, wie er z.B. durch die erste Kameraeinheit 121 von der Beifahrerseite 16 aus erfasst wird. Beide erfassten Bodenbereiche 230, 240 können in ähnlicher Weise bildlich dargestellt werden, wie der erste Bodenbereich 210 und der zweite Bodenbereich 220 (siehe Fig. 5A, 5B).

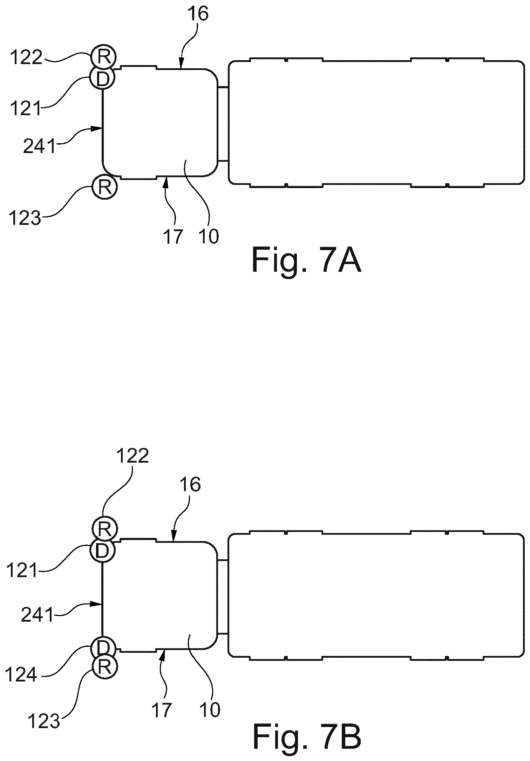

**Fig. 7A** zeigt beispielhaft das Anbringen der Kameraeinheiten 121, 122, ... an verschiedenen Positionen an der Kabine 10 des Nutzfahrzeuges. Die erste Kameraeinheit 121 wird dabei zusammen mit der zweiten Kameraeinheit 122 in einem vorderen Eckbereich auf der Beifahrerseite 16 montiert. Die dritte Kameraeinheit 123 wird in einem vorderen Eckbereich auf der Fahrerseite 17 der Fahrerkabine 10 befestigt.

**Fig. 7B** zeigt ein Anbringen der Kameraeinheiten für das Ausführungsbeispiel aus der Fig. 2. Hierzu werden zusätzlich zu den in der Fig. 7A dargestellten Kameraeinheiten 121, 122, 123 noch die vierte Kameraeinheit 124 in einem vorderen Eckbereich auf der Fahrerseite 17 an der Fahrerkabine 10 befestigt. Durch die dargestellten Befestigungen in dem vorderen Eckbereich wird es möglich, dass die erfassten Bodenbereiche durch verschieden Kameraeinheiten erfasst werden. Die Bilddaten sind somit redundant (zumindest für den ersten Bodenbereich 210, den zweiten Bodenbereich 220 und den vierten Bodenbereich 240) und das System fehlerresistent.

Wesentliche Aspekte von Ausführungsbeispiele der vorliegenden Erfindung können wie folgt zusammengefasst werden:
Das Kamerasystem stellt eine redundante Bilderfassung zumindest für die Beifahrerseite eines Fahrzeuges zur Verfügung, sodass ein Versagen einer Komponente nicht zu einem Totalausfall des Systems führt und der Fahrer trotz eines Fehlers den Seiten- und Rückbereich erfassen kann. Die Architektur umfasst dazu beispielsweise zwei rückwärts gerichtete Kameras oder Kameraeinheiten 122, 123, die jeweils in vorderen Eckbereichen der Fahrerkabine 10 angebracht werden können (z.B. als Ersatz für konventionelle Spiegel) und ein ausreichend großes Blickfeld erfassen, um mehrere Bereiche seitlich und hinter dem Fahrzeug bildlich darstellen zu können. Außerdem ist eine nach unten gerichtete Kamera 121 vorgesehen, die beispielsweise ein Weitwinkelobjektiv oder eine Fischaugenlinse aufweist und zumindest auf der Beifahrerseite 16 angebracht wird, um dort mehrere Erfassungsbereiche (Bodenbereiche) überlappend abdecken zu können.

Vorteilhafterweise sind auch auf der Fahrerseite 17 zwei Arten von Kameras vorgesehen, eine Weitwinkelkamera 124 um einen unteren Bereich neben und/oder vor der Fahrerkabine 10 abzudecken und eine nach hinten gerichtete Kamera 123. Außerdem umfasst das System zumindest zwei Anzeigeeinheiten 131, 132 für den Fahrer, die vorteilhafterweise auf jeder Seite der Fahrzeugkabine 10 vorgesehen sind und die Kamerabilder bildlich darstellen. Außerdem umfasst das System zumindest zwei unabhängige Bildverarbeitungseinheiten 111, 112, die an unabhängigen Stromversorgungseinheiten 141, 142 angeschlossen sind, wobei jede Bildverarbeitungseinheit 111, 112 einen Teil der Kameradaten auswertet und eine entsprechende Anzeigeeinheiten 131, 132 ansteuert.

Die zumindest zwei Bildverarbeitungseinheiten 111, 112, verarbeiten die Kamerabilder derart, dass zumindest die Beifahrerseite 16 des Fahrzeuges eine redundante Abdeckung zumindest für den rückwärtigen Bereich des Nutzfahrzeuges erlaubt. Dazu wird beispielsweise eines der beiden Kamerasysteme auf die eine Anzeige geleitet und Bilddaten des anderen Kamerasystems auf die andere Anzeige, die außerdem jeweils eine separate Stromversorgung aufweisen.

Schließlich können die Bildverarbeitungseinheiten 111, 112 über eine Datenleitung 115 miteinander verbunden werden, um Bilddaten auszutauschen. Dies ist insbesondere dann sinnvoll, wenn eines der Systeme ausfällt, so dass automatisch die erfassten Bilddaten an das andere System durch die andere Anzeige dargestellt werden können. Dadurch wird die Sicherheit bei der bildlichen Erfassung der Umgebung des Nutzfahrzeuges deutlich erhöht.

Ausführungsbeispiele der vorliegenden Erfindung beziehen sich insbesondere auch auf die folgenden Gegenstände:
Ein System zum Ersetzen von Rückspiegeln für Nutzfahrzeugen mit einer Fehlersicherung, gekennzeichnet durch zumindest einem redundanten Kameraüberwachungssystem für die Beifahrerseite des Fahrzeuges.

Gemäß weiterer vorteilhafter Ausführungsformen umfasst in dem System das redundante Kameraüberwachungssystem zumindest eine nach rückwärts gerichtete Kamera in einem Schaltkreis und eine nach unten gerichtete Fischaugenkamera in dem anderen Schaltkreis, wobei jedes der beiden Kameras zwei Sensorbereiche auf der Beifahrerseite erfassen und beide Schaltkreise mit einer Datenverbindung verbunden sind, um eine Unabhängigkeit der Darstellung zu ermöglichen.

Gemäß weiterer vorteilhafter Ausführungsformen umfasst in dem System das redundante Kameraüberwachungssystem zumindest eine weitere rückwärts gerichtete Kamera (die zwei Sensorbereiche auf der Fahrerseite erfasst), die in dem gleichen Schaltkreis wie die nach unten gerichtete Fischaugenkamera integriert ist.

Gemäß weiterer vorteilhafter Ausführungsformen ist in dem System ebenfalls auf der Fahrerseite ein redundantes Kameraüberwachungssystem vorgesehen.

Gemäß weiterer vorteilhafter Ausführungsformen umfasst in dem System das redundante Kameraüberwachungssystem zumindest eine rückwärts gerichtete Kamera in einer der Schaltkreise (die zwei Sensorbereiche auf der Fahrerseite erfasst) und eine nach unten gerichtete Fischaugenkamera (die zumindest zwei Sensorbereiche auf der Fahrerseite erfasst) in dem anderen Schaltkreis, wobei die Schaltkreise über eine Datenverbindung miteinander verbunden sind, um unabhängige Anzeigemöglichkeiten zu bieten.

Gemäß weiterer vorteilhafter Ausführungsformen ist in dem System ebenfalls die Vorderseite des Fahrzeuges durch ein redundantes Kamerasystem erfasst.

Gemäß weiterer vorteilhafter Ausführungsformen umfasst in dem System das redundante Kameraüberwachungssystem zumindest zwei nach unten gerichtete Fischaugenkameras (jedes davon erfasst den Sensorbereich vor dem Fahrzeug), die separat mit den zwei Schaltkreise verbunden sind, wobei die Schaltkreise über eine Datenverbindung miteinander verbunden sind, um eine unabhängige Darstellung zu ermöglichen.

Ein Verfahren zum Feststellen eines Fehlers in einem Kameraüberwachungssystem für Nutzfahrzeuge umfasst außerdem einen Algorithmus, der auf die Bilddaten angewendet wird, um eine Abweichung der Bilderfassung (z.B. ein eingefrorenes Bild) für überlappende Sensorbereiche zu erhalten. Im Falle einer festgestellten Abweichung erfolgt eine entsprechende Deaktivierung des betreffenden Schaltkreises (oder Schaltung) und ein Darstellen der entsprechenden Bilddaten für den Fahrer durch das verbleibende intakte System.

Dieses Verfahren dient dazu, festzustellen, ob eine Fehlfunktion in einer der Unterkomponenten des Kameraüberwachungssystems vorliegt. Ansprechend auf ein solches Fehlverhalten, werden die erfassten Bilddaten entsprechend anders innerhalb des Systems weitergeleitet und dort dem Fahrer zur Verfügung gestellt.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Fahrerkabine
- 15: Fahrerposition (Augenpositionen)
- 16: Beifahrerseite (Fahrzeugrand an Beifahrerseite)
- 17: Fahrerseite
- 20: Fahrbahnmarkierungen
- 111,112, ...: Bildverarbeitungseinheiten
- 115: Datenverbindung
- 121,122, ...: Kameraeinheiten
- 131, 132: separate Anzeigeeinheiten
- 141, 142: separate Stromversorgungseinheiten
- 210,220, ...: Seitenbereich
- 211,121, ...: vordere Bezugslinien (erste Linie, zweite Linie, ...)
- 241: vordere Fahrzeugrand/Fahrzeugbegrenzung

## Patentansprüche

1. Kameraüberwachungssystem für zumindest einen Seitenbereich (210, 220, 230) auf einer Beifahrerseite (16) eines Nutzfahrzeugs,
umfassend
- eine erste Bildverarbeitungseinheit (111);
- eine erste Kameraeinheit (121) zur Erfassung von Bilddaten von dem zumindest einen Seitenbereich (210, 220, 230), wobei die erste Kameraeinheit (121) die Bilddaten zur Verarbeitung der ersten Bildverarbeitungseinheit (111) zur Verfügung stellt;
- eine zweite Bildverarbeitungseinheit (112);
- eine zweite Kameraeinheit (122) zur Erfassung von weiteren Bilddaten von dem zumindest einen Seitenbereich (210, 220, 230), wobei die zweite Kameraeinheit (122) die weiteren Bilddaten zur Verarbeitung der zweiten Bildverarbeitungseinheit (112) zur Verfügung stellt; und
- eine Datenverbindung (115) zwischen der ersten Bildverarbeitungseinheit (111) und der zweiten Bildverarbeitungseinheit (112),
**dadurch gekennzeichnet, dass**
die erste Bildverarbeitungseinheit (111) und die zweite Bildverarbeitungseinheit (112) ausgebildet sind, um unabhängig voneinander Bilddaten zu verarbeiten und um empfangene Bilddaten über die Datenverbindung (115) auszugeben, um eine redundante Bilderfassung für den zumindest einen Seitenbereich (210, 220, 230) zu ermöglichen,
wobei die erste Bildverarbeitungseinheit (111) und/oder die zweite Bildverarbeitungseinheit (112) ausgebildet sind, um zumindest eine der folgenden Funktionen auszuführen:
- Bilddaten von überlappenden Erfassungsbereiche zu vergleichen und, basierend darauf, einen Fehler des Kameraüberwachungssystems festzustellen;
- eine Bildtranstransformation von Bilddaten von der ersten Kameraeinheit (121) und/oder der zweiten Kameraeinheit (122) durchzuführen, um Verzerrungen in horizontalen Bildbereichen zu verringern;
- Fahrbahnmarkierungen (20) in den Bilddaten von der ersten Kameraeinheit (121) und/oder der zweiten Kameraeinheit (122) zu identifizieren, um eine Spurverfolgung zu unterstützen.

2. Kameraüberwachungssystem nach Anspruch 1,
**gekennzeichnet durch**
eine dritte Kameraeinheit (123) zur Erfassung von Bilddaten von einem weiteren Seitenbereich (210, 220, 230) auf einer Fahrerseite (17) des Nutzfahrzeuges, wobei die dritte Kameraeinheit (123) die Bilddaten zur Verarbeitung der ersten Bildverarbeitungseinheit (111) zur Verfügung stellt; und/oder
eine vierte Kameraeinheit (124) zur Erfassung von Bilddaten von dem weiteren Seitenbereich (210, 220, 230) auf der Fahrerseite (17) des Nutzfahrzeuges, wobei die vierte Kameraeinheit (124) die Bilddaten zur Verarbeitung der zweiten Bildverarbeitungseinheit (112) zur Verfügung stellt.

3. Kameraüberwachungssystem nach Anspruch 1 oder Anspruch 2,
**gekennzeichnet durch**
eine erste Anzeigeeinheit (131) zur Anzeige von verarbeiteten Bilderdaten von der ersten Bildverarbeitungseinheit (111); und/oder
eine zweite Anzeigeeinheit (132) zur Anzeige von verarbeiteten Bilderdaten von der zweiten Bildverarbeitungseinheit (111).

4. Kameraüberwachungssystem nach Anspruch 2, oder Anspruch 3 soweit rückbezogen auf Anspruch 2,
**dadurch gekennzeichnet, dass**
die erste Bildverarbeitungseinheit (111) und/oder die zweite Bildverarbeitungseinheit (112) ausgebildet sind, um zumindest eine der folgenden Funktionen auszuführen:
- eine Bildtranstransformation von Bilddaten von der dritten Kameraeinheit (123) und/oder der vierten Kameraeinheit (124) durchzuführen, um Verzerrungen in horizontalen Bildbereichen zu verringern;
- Fahrbahnmarkierungen (20) in den Bilddaten von der dritten Kameraeinheit (123) und/oder der vierten Kameraeinheit (124) zu identifizieren, um eine Spurverfolgung zu unterstützen.

5. Kameraüberwachungssystem nach einem der vorhergehenden Ansprüche,
**dadurch gekennzeichnet, dass**
die erste Kameraeinheit (121) ein Fischaugenobjektiv aufweist, um bei Anbringung an einem vorderen Eckbereich des Nutzfahrzeuges gleichzeitig einen Vorderbereich (240) vor dem Nutzfahrzeug und den zumindest einen Seitenbereich (210, 220, 230) auf der Beifahrerseite (16) zu erfassen; und/oder
die vierte Kameraeinheit (124) ein Fischaugenobjektiv aufweist, um bei Anbringung an einem vorderen Eckbereich des Nutzfahrzeuges gleichzeitig den Vorderbereich (240) und den Seitenbereich (210, 220, 230) auf der Fahrerseite (17) zu erfassen.

6. Kameraüberwachungssystem nach Anspruch 5,
**dadurch gekennzeichnet, dass**
die erste Kameraeinheit (121) und die vierte Kameraeinheit (124) jeweils weiter ausgebildet sind, um Bodenbereiche (230, 240) vor und neben der Fahrerkabine (10) zu erfassen, um so eine redundante Erfassung des Bodenbereichs (240) vor der Fahrerkabine (10) zu ermöglichen.

7. Kameraüberwachungssystem nach einem der vorhergehenden Ansprüche,
**dadurch gekennzeichnet, dass**
der Seitenbereich (210, 220, 230) und der weitere Seitenbereich (210, 220, 230) auf der jeweiligen Seite zumindest einen wie folgt definierten ersten Bodenbereich (210) umfassen:
beginnend mit einer ersten Linie (211), die sich senkrecht zu einer Bewegungsrichtung des Nutzfahrzeuges erstreckt und um 4 m von einer Position (15) eines Fahrzeugführer nach hinten versetzt ist, erstreckt sich der erste Bodenbereich (210) mit einer variablen Breite seitlich parallel zu einem Fahrzeugrand (16, 17) nach hinten, wobei die variable Breite bis zu einem Abstand von 26 m von der ersten Linie (211) linear von 1 m auf eine Breite von 5 m zunimmt und dann konstant bleibt.

8. Kameraüberwachungssystem nach einem der vorhergehenden Ansprüche, **dadurch gekennzeichnet, dass**
der Seitenbereich und der weitere Seitenbereich auf der jeweiligen Seite einen wie folgt definierten zweiten Bodenbereich (220) umfassen:
beginnend mit einer zweiten Linie (221), die sich senkrecht zu einer Bewegungsrichtung des Nutzfahrzeuges erstreckt und um 1,5 m von einer Position (15) eines Fahrzeugführer nach hinten versetzt ist, erstreckt sich der zweite Bodenbereich (210) mit einer variablen Breite seitlich parallel zu einem Fahrzeugrand (16, 17) auf eine Länge von 23,5 m nach hinten, wobei die variable Breite bis zu einem Abstand von 8,5 m von der zweiten Linie (221) linear von 4,5 m auf eine Breite von 15 m zunimmt und dann konstant bleibt.

9. Kameraüberwachungssystem nach einem der vorhergehenden Ansprüche, **dadurch gekennzeichnet, dass**
der Seitenbereich (210, 220, 230) und der weitere Seitenbereich (210, 220, 230) auf der jeweiligen Seite einen wie folgt definierten dritten Bodenbereich (230) umfassen:
beginnend mit einer dritten Linie (231), die sich senkrecht zu einer Bewegungsrichtung des Nutzfahrzeuges durch eine Position eines Fahrzeugführers (15) erstreckt, erstreckt sich der dritte Bodenbereich (230) 1,75 m nach hinten und 1 m nach vorne auf einer Breite von 2 m parallel zu einem Fahrzeugrand (16, 17).

10. Kameraüberwachungssystem nach einem der vorhergehenden Ansprüche, **dadurch gekennzeichnet, dass**
der Vorderbereich (240) einen wie folgt definierten vierten Bodenbereich (240) umfasst:
beginnend mit einer vorderen Fahrzeugbegrenzung (241) erstreckt sich der vierte Bodenbereich (240) bis auf zumindest 2 m vor einer Gesamtbreite der Führerkabine (10) und seitlich 2 m über die Beifahrerseite (17) hinaus.

11. Nutzfahrzeug,
**gekennzeichnet durch**
ein Kameraüberwachungssystem nach einem der vorhergehenden Ansprüche.

12. Verfahren zum Feststellen eines Fehlers eines Kameraüberwachungssystems nach einem der Ansprüche 1 bis 10,
**gekennzeichnet durch**
- Verarbeiten von Bilddaten der ersten Kameraeinheit (121) in der ersten Bildverarbeitungseinheit (111) und verarbeiten von Bilddaten der zweiten Kameraeinheit (122) in der zweiten Bildverarbeitungseinheit (112);
- Ausgeben von Bilddaten von der ersten Bildverarbeitungseinheit (111) und der zweiten Bildverarbeitungseinheit (112) über die Datenverbindung (105) zwischen der ersten Bidverarbeitungseinheit (111) und der zweiten Bildverarbeitungseinheit (112),
wobei die erste Bildverarbeitungseinheit (111) und/oder die zweite Bildverarbeitungseinheit (112) ausgebildet sind, um zumindest eine der folgenden Schritte auszuführen:
- Vergleichen von Bilddaten zu überlappenden Bildbereichen, die von verschiedenen Kameraeinheiten erfasst wurden, und basierend darauf Feststellen eines Fehlers in dem Kameraüberwachungssystem;
- Durchführen einer Bildtransformation von Bilddaten der ersten Kameraeinheit (121) und/oder der zweiten Kameraeinheit (122), um Verzerrungen in horizontalen Bildbereichen zu verringern;
- Identifizieren von Fahrbahnmarkierungen (20) in den Bilddaten von der ersten und/oder der zweiten Kameraeinheit, um eine Spurverfolgung zu unterstützen.

13. Verfahren nach Anspruch 12,
**dadurch gekennzeichnet, dass**
das Vergleichen zumindest eines aus dem Folgenden umfasst:
- Feststellen einer Nichtübereinstimmung der überlappenden Bildbereiche;
- Feststellen eines eingefrorenen Bildes, das von einem der Kameraeinheiten erfasst wurde;
- Transformieren von Bilddaten, um Verzerrungen von Fischaugenobjektiven oder Weitwinkelobjektiven zu verringern.

14. Computerprogrammprodukt mit darauf gespeicherter Software, die ausgebildet ist, um das Verfahren nach Anspruch 12 auszuführen, wenn die Software auf einer Datenverarbeitungseinheit ausgeführt wird.

## Claims

1. Camera monitoring system for at least one lateral area (210, 220, 230) on the passenger side (16) of a commercial vehicle,
comprising
- a first image processing unit (111);
- a first camera unit (121) for acquiring image data from the at least one lateral area (210, 220, 230), wherein the first camera unit (121) provides the image data to the first image processing unit (111) for processing;
- a second image processing unit (112);
- a second camera unit (122) for acquiring further image data from the at least one lateral area (210, 220, 230), wherein the second camera unit (122) provides the further image data to the second image processing unit (112) for processing; and
- a data connection (115) between the first image processing unit (111) and the second image processing unit (112),
**characterised in that**
the first image processing unit (111) and the second image processing unit (112) are configured to process image data independently of one another and to output received image data via the data connection (115), in order to facilitate a redundant image acquisition for the at least one lateral area (210, 220, 230),
wherein the first image processing unit (111) and/or the second image processing unit (112) are configured to execute at least one of the following functions:
- comparing image data from overlapping data acquisition areas and, based thereon, determining the presence of a defect in the camera monitoring system;
- carrying out an image transformation of image data from the first camera unit (121) and/or the second camera unit (122) in order to reduce distortions in horizontal image areas;
- identifying road markings (20) in the image data from the first camera unit (121) and/or the second camera unit (122) in order to assist lane tracking.

2. Camera monitoring system according to claim 1,
**characterised by**
a third camera unit (123) for acquiring image data from a further lateral area (210, 220, 230) on the driver's side (17) of the commercial vehicle, wherein the third camera unit (123) provides the image data to the first image processing unit (111) for processing; and/or
a fourth camera unit (124) for acquiring image data from the further lateral area (210, 220, 230) on the driver's side (17) of the commercial vehicle, wherein the fourth camera unit (124) provides the image data to the second image processing unit (112) for processing.

3. Camera monitoring system according to claim 1 or claim 2,
**characterised by**
a first display unit (131) for displaying processed image data from the first image processing unit (111); and/or
a second display unit (132) for displaying processed image data from the second image processing unit (111).

4. Camera monitoring system according to claim 2, or to claim 3 insofar as it refers back to claim 2,
**characterised in that**
the first image processing unit (111) and/or the second image processing unit (112) are configured to execute at least one of the following functions:
- reducing an image transformation of image data from the third camera unit (123) and /or the fourth camera unit (124) in order to reduce distortions in horizontal image areas;
- identifying road markings (20) in the image data from the third camera unit (123) and/or the fourth camera unit (124) in order to assist lane tracking.

5. Camera monitoring system according to any one of the preceding claims, **characterised in that**
the first camera unit (121) has a fisheye objective which, when attached to a front corner area of the commercial vehicle, simultaneously records a front area (240) ahead of the commercial vehicle and the at least one lateral area (210, 220, 230) on the passenger side (16); and/or
the fourth camera unit (124) has a fisheye objective which, when attached to a front corner area of the commercial vehicle, simultaneously records the front area (240) and the lateral area (210, 220, 230) on the driver's side (17).

6. Camera monitoring system according to claim 5,
**characterised in that**
the first camera unit (121) and the fourth camera unit (124) are further configured in each case to record ground areas (230, 240) ahead of and to the side of the driver's cab (10), in order to thus facilitate a redundant recording of the ground area (240) ahead of the driver's cab (10).

7. Camera monitoring system according to any one of the preceding claims, **characterised in that**
the lateral area (210, 220, 230) and the further lateral area (210, 220, 230) comprise, on the relevant side in each case, at least one first ground area (210) defined as follows:
beginning with a first line (211) extending perpendicularly to the direction of movement of the commercial vehicle and being offset to the rear by 4 m from a position (15) of a vehicle driver, the first ground area (210) extends rearwards, with a variable width, laterally parallel to a vehicle edge (16, 17), wherein the variable width increases as far as a distance of 26 m from the first line (211) linearly from 1 m to a width of 5 m, and then remains constant.

8. Camera monitoring system according to any one of the preceding claims, **characterised in that**
the lateral area and the further lateral area comprise, on the relevant side in each case, a second ground area (220) defined as follows:
beginning with a second line (221) extending perpendicularly to a direction of movement of the commercial vehicle and being offset to the rear by 1.5 m from a position (15) of a vehicle driver, the second ground area (210) extends rearwards, with a variable width, laterally parallel to a vehicle edge (16, 17), as far as a length of 23.5 m, wherein the variable width increases linearly, as far as a distance of 8.5 m from the second line, (221) from 4.5 m to a width of 15 m, and then remains constant.

9. Camera monitoring system according to any one of the preceding claims, **characterised in that**
the lateral area (210, 220, 230) and the further lateral area (210, 220, 230) comprise, on the relevant side in each case, a third ground area (230) defined as follows:
beginning with a third line (231) extending perpendicularly to the direction of movement of the commercial vehicle through a position of a vehicle driver (15), the third ground area (230) extends 1.75 m rearwards and 1 m forwards at a width of 2 m parallel to a vehicle edge (16, 17).

10. Camera monitoring system according to any one of the preceding claims, **characterised in that**
the front area (240) comprises a fourth ground area (240) defined as follows:
beginning with a front vehicle boundary (241), the fourth ground area (240) extends up to at least 2 m in front of an overall width of the driver's cab (10) and laterally 2 m beyond the passenger side (17).

11. Commercial vehicle,
**characterised by**
a camera monitoring system according to any one of the preceding claims.

12. Method for determining the presence of a defect in a camera monitoring system according to any one of claims 1 to 10,
**characterised by**
- processing image data of the first camera unit (121) in the first image processing unit (111) and processing image data of the second camera unit (122) in the second image processing unit (112);
- outputting image data from the first image processing unit (111) and the second image processing unit (112) via the data connection (105) between the first image processing unit (111) and the second image processing unit (112),
wherein the first image processing unit (111) and/or the second image processing unit (112) are configured to perform at least one of the following steps:
- comparing image data for overlapping image areas acquired by different camera units and, based thereon, determining the presence of a defect in the camera monitoring system;
- carrying out an image transformation of image data of the first camera unit (121) and/or the second camera unit (122) in order to reduce distortions in horizontal image areas;
- identifying road markings (20) in the image data from the first and/or the second camera unit in order to assist lane tracking.

13. Method according to claim 12,
**characterised in that**
the comparing step comprises at least one of the following:
- determining a non-correspondence of the overlapping image areas;
- determining a frozen image acquired by one of the camera units;
- transforming image data in order to reduce distortions by fisheye objectives or wide-angle objectives.

14. Computer program product which has software stored thereon and is configured to carry out the method according to claim 12 when the software is executed on a data processing unit.

## Revendications

1. Système de surveillance par caméras d'au moins une partie (210, 220, 230) latérale du côté (16) d'un passager avant d'un véhicule utilitaire,
comprenant
- une première unité (111) de traitement de l'image ;
- une première unité (121) de caméra pour la détection de données d'image de la au moins une partie (210, 220, 230) latérale, dans lequel la première unité (121) de caméra met les données d'image à disposition pour le traitement par la première unité (111) de traitement de l'image ;
- une deuxième unité (112) de traitement de l'image ;
- une deuxième unité (122) de caméra pour la détection d'autres données d'image de la au moins une partie (210, 220, 230) latérale, dans lequel la deuxième unité (122) de caméra met à disposition les autres données d'image, pour le traitement par la deuxième unité (112) de traitement de l'image ; et
- une liaison (115) de transmission de données entre la première unité (111) de traitement de l'image et la deuxième unité (112) de traitement de l'image,
**caractérisé en ce que**
la première unité (111) de traitement de l'image et la deuxième unité (112) de traitement de l'image sont constituées pour traiter des données d'image indépendamment l'une de l'autre et pour envoyer des données d'image reçues par l'intermédiaire de la liaison (115) de transmission de données, afin de rendre possible une détection redondante d'image de la au moins une partie (210, 220, 230) latérale,
dans lequel la première unité (111) de traitement de l'image et/ou la deuxième unité (112) de traitement de l'image sont constituées pour effectuer au moins l'une des fonctions suivantes :
- pour comparer des données d'image de parties de détection, qui se chevauchent et, sur cette base, pour constater un défaut du système de surveillance par caméras ;
- pour effectuer une transformation d'image des données d'image de la première unité (121) de caméra ou de la deuxième unité (122) de caméra, afin de diminuer des distorsions dans des parties d'image horizontales ;
- pour identifier des repères (20) sur la voie de circulation dans les données d'image de la première unité (121) de caméra et/ou la deuxième unité (122) de caméra, pour venir à l'appui d'un suivi de la voie.

2. Système de surveillance par caméras suivant la revendication 1,
**caractérisé par**
une troisième unité (123) de caméra, pour la détection de données d'image d'une autre partie (210, 220, 230) latérale d'un côté (17) du conducteur du véhicule utilitaire, dans lequel la troisième unité (123) de caméra met à disposition des données d'image pour le traitement par la première unité (111) de traitement de l'image ; et/ou
une quatrième unité (124) de caméra , pour la détection de données d'image d'une autre partie (210, 220, 230) latérale d'un côté (17) du conducteur du véhicule utilitaire, dans lequel la quatrième unité (124) de caméra met à disposition des données d'image pour le traitement par la première unité (112) de traitement de l'image.

3. Système de surveillance par caméras suivant la revendication 1 ou la revendication 2,
**caractérisé par**
une première unité (131) d'affichage pour l'affichage de données d'image traitées par la première unité (111) de traitement de l'image ; et/ou
une deuxième unité (132) d'affichage pour l'affichage de données d'image traitées par la deuxième unité (111) de traitement de l'image.

4. Système de surveillance par caméras suivant la revendication 2 ou la revendication 3, dans la mesure où elle se rapporte à la revendication 2,
**caractérisé en ce que**
la première unité (111) de traitement de l'image et/ou la deuxième unité (112) de traitement de l'image sont constituées pour effectuer au moins l'une des fonctions suivantes :
- pour effectuer une transformation d'image de données d'image de la troisième unité (123) de caméra et/ou de la quatrième unité (124) de caméra, afin de diminuer des distorsions dans des parties d'image horizontales ;
- pour identifier des repères (20) sur la voie de circulation dans les données d'image de la troisième unité (123) de caméra et/ou de la quatrième unité (124) de caméra, pour venir à l'appui d'un suivi de la voie.

5. Système de surveillance par caméras suivant l'une des revendications précédentes,
**caractérisé en ce que**
la première unité (121) de caméra a un objectif grand angulaire pour, par un montage sur une partie de coin avant du véhicule utilitaire, détecter en même temps une partie (240) plus en avant, devant le véhicule utilitaire et la au moins une partie (210, 220, 230) latérale du côté (16) du passager à côté du conducteur ; et/ou
la quatrième unité (124) de caméra a un objectif grand angulaire pour, par un montage sur une partie de coin avant du véhicule utilitaire, détecter en même temps une partie (240) plus en avant, devant le véhicule utilitaire, et la au moins une partie (210, 220, 230) latérale du côté (17) du conducteur.

6. Système de surveillance par caméras suivant la revendication 5,
**caractérisé en ce que**
la première unité (121) unité de caméra et la quatrième unité (124) de caméra sont constituées respectivement en outre pour détecter des parties (230, 240) du sol, avant et à côté de la cabine (10) du conducteur, afin de permettre ainsi une détection redondante de la partie (240) du sol, avant la cabine (10) du conducteur.

7. Système de surveillance par caméras suivant l'une des revendications précédentes,
**caractérisé en ce que**
la partie (210, 220, 230) latérale et l'autre partie (210, 220, 230) latérale du côté respectif comprennent au moins un première partie (210) du sol, définie de la manière suivante :
commençant avec une première ligne (211), qui s'étend perpendiculairement à une direction de déplacement du véhicule utilitaire et qui est décalée vers l'arrière de 4 mètres d'une position (15) d'un conducteur du véhicule, la première partie (210) de fond s'étend avec une largeur variable latéralement parallèlement à un bord (16, 17) du véhicule vers l'arrière, dans lequel la largeur variable augmente, jusqu'à une distance de 26 mètres de la première ligne (211), linéairement de 1 mètre à une largeur de 5 mètres et reste ensuite constante.

8. Système de surveillance par caméras suivant l'une des revendications précédentes,
**caractérisé en ce que**
la partie latérale et l'autre partie latérale du côté respectif comprennent une deuxième partie (220) de sol définie de la manière suivante :
commençant avec une deuxième ligne (221), qui s'étend perpendiculairement à une direction de déplacement du véhicule utilitaire et qui est décalée vers l'arrière de 1,5 m d'une position d'un conducteur (15) du véhicule, la deuxième partie (210) de fond s'étend avec une largeur variable latéralement parallèlement à un bord (16, 17) du véhicule sur une longueur de 23,5 m vers l'arrière, la largeur variable augmentant, jusqu'à une distance de 8,5 m de la deuxième ligne (221) linéairement de 4,5 m à une largeur de 15 m et restant ensuite constante.

9. Système de surveillance par caméras suivant l'une des revendications précédentes,
**caractérisé en ce que**
la partie (210, 220, 230) latérale et l'autre partie (210, 220, 230) latérale sur le côté respectif comprennent une troisième partie (230) de fond définie de la manière suivante :
commençant avec une troisième ligne (231), qui s'étend perpendiculairement à une direction de déplacement du véhicule utilitaire, en passant par une position d'un conducteur (15) du véhicule, la troisième partie (230) de fond s'étend de 1,75 m vers l'arrière et de 1 m vers l'avant, sur une largeur de 2 m parallèlement à un bord (16, 17) du véhicule.

10. Système de surveillance par caméras suivant l'une des revendications précédentes,
**caractérisé en ce que**
la partie (240) avant comprend une quatrième partie (240) de fond définie de la manière suivante :
commençant avec une délimitation (241) plus avant du véhicule, la quatrième partie (240) de fond s'étend, jusqu'à au moins 2 m, avant une largeur d'ensemble de la cabine (10) du conducteur et latéralement de 2 m au-delà du côté (17) du passager à l'avant à côté du conducteur.

11. Véhicule utilitaire,
**caractérisé par**
un système de surveillance par caméras suivant l'une des revendications précédentes.

12. Procédé de constatation d'un défaut d'un système de surveillance par caméras suivant l'une des revendications 1 à 10, **caractérisé par**
- traitement de données d'image de la première unité (121) de caméra dans la première unité (111) de traitement de l'image, et traitement de données d'image de la deuxième unité (122) de caméra dans la deuxième unité (112) de traitement de l'image ;
- envoi de données d'image par la première unité (111) de traitement de l'image et de la deuxième unité (112) de traitement de l'image, par l'intermédiaire de la liaison (105) de transmission de données entre la première unité (111) de traitement de l'image et la deuxième unité (112) de traitement de l'image,
dans lequel la première unité (111) de traitement de l'image et/ou la deuxième unité (112) de traitement de l'image sont constituées pour effectuer au moins l'une des fonctions suivantes :
- pour comparer des données d'image de parties de détection, qui se chevauchent et, sur cette base, pour constater un défaut du système de surveillance par caméras ;
- pour effectuer une transformation d'image des données d'image de la première unité (121) de caméra ou de la deuxième unité (122) de caméra, afin de diminuer des distorsions dans des parties d'image horizontales ;
- pour identifier des repères (20) sur la voie de circulation, dans les données d'image de la première unité de caméra et/ou la deuxième unité de caméra, pour venir à l'appui d'un suivi de la voie.

13. Procédé suivant la revendication 12,
**caractérisé en ce que**
la comparaison comprend au moins l'une des suivantes :
- constatation d'une absence de correspondance entre les parties d'image, qui se chevauchent ;
- constatation d'une image gelée, qui a été détectée par l'une des unités de caméras ;
- transformation de données d'image pour diminuer des distorsions d'objectifs grand angle ou d'objectifs à angle spatial.

14. Produit de programme d'ordinateur, sur lequel est mis en mémoire du logiciel, qui est constitué pour exécuter suivant la revendication 12, lorsque le logiciel est réalisé sur une unité de traitement de données.
